# EUROPEAN PATENT APPLICATION

(11) **EP 0 768 241 A1**
(43) Date of publication of application: **16.04.1997**
(21) Application number: 96500010.2
(22) Date of filing: 31.01.1996
(51) Int. Cl.: B64G 1/64

(54) **Fastening and separating system for satellites**

(30) Priority: 16.10.1995 ES 9501994
(71) Applicant: CONSTRUCCIONES AERONAUTICAS, S.A., E-28022 Madrid (ES)
(72) Inventor: Canay, Miguel, E-28004 Madrid (ES); Uribarri, Venancio, E-28042 Madrid (ES); Cespedosa, Fernando, E-28010 Madrid (ES); Avila, Jorge, E-28007 Madrid (ES)
(74) Representative: Elzaburu Marquez, Alberto

(57) **Abstract**

Fastening and separating system for satellites. It comprises a fastening piece (1) which is screwed to the upper ring (2) of the adaptor (3) of the launch rocket, a tensioning strip (6) consisting of a two-part metal band, curved metal pieces (7) for fastening the satellite (8) which have a thin-walled cylindrical body with a metal rotational shaft (9) in its lower part formed by several lugs and which rest via their upper part on the lower ring (10) of the satellite (8), surrounding it and pressing on it, and pressing cams (5) which each have two rotational shafts (9, 4), one (9) coinciding with that of said metal pieces (7) and the other (4) shared with said piece (1). The invention simplifies the securing of the satellite to the launch rocket and its release upon entering into orbit.

## Description

### FIELD OF THE INVENTION

The present invention relates to a fastening and separating system for satellites which aims to keep the satellite secured to the launch rocket during placing in orbit and to release it once it is in orbit. The satellite is secured to the launch rocket by means of a piece known as an adaptor which is mounted on the launch rocket and above which the satellite is arranged.

The operating principle of the system developed by the invention consists in pressing the satellite against the adaptor by means of the deformation of a piece which deforms elastically when pressed by a metal band or strip between the satellite and a cam which rotates and deforms the piece. In accordance with the principle set forth, a plurality of pieces surround the satellite and its adaptor.

### BACKGROUND OF THE INVENTION

Various systems are known in the prior art for achieving the fastening required between a satellite and its launch rocket during placing in orbit, such systems being equipped with means which make it possible to release the satellite once it has reached the chosen orbit. Therefore, for example, Patent EP-A-0,402,263 discloses a temporary link-up device, especially for an artificial satellite appendage, and a procedure for releasing said link-up.

The majority of known systems are based on the use of a type of clamp which grips that part of the satellite and the adaptor at which both are joined together and which is held in place by means of a tensioning strip. These systems suffer from the disadvantage that they require an excessive tension in the said band in order to remain operational, which may give rise to the production of seize-up effects on the contact surfaces of the satellite and the adaptor, and which may give rise to excessively violent satellite releases, with the result that detachment of the satellite is made substantially more difficult. The tensioning strip may also slip through the action of the forces which act on the satellite, in the case of large satellites of considerable mass, and the adaptor and which tend to separate them in such a manner that, in extreme situations, the tensioning strip may cease to exert its securing function, permitting early release of the satellite and the latter's consequent loss.

### SUMMARY OF THE INVENTION

There is therefore a need for a fastening and separating system for satellites which overcomes the drawbacks of the known systems of the prior art and which, simultaneously, has a simple structure, is inexpensive to manufacture and offers a high degree of reliability during operation.

This objective is achieved by means of the fastening and separating system for satellites of the present invention which comprises a piece for fastening the system which is screwed to the ring of the adaptor of the launch rocket and a tensioning strip consisting of a metal band in two parts which surround and press on pieces for fastening the satellite as they are placed under tension, and which is characterized in that said pieces for fastening the satellite consist of a plurality of curved metal pieces which have a thin-walled cylindrical body with a metal rotational shaft in its lower part formed by several lugs and which rest via their upper part on the lower ring of the satellite, surrounding it and pressing on it, and in that it includes, moreover, a plurality of pressing cams which each have two metal rotational shafts, the first of them coinciding with that of said plurality of curved metal pieces and the second shared with said piece for fastening to the ring of the adaptor. The system of the invention is thus accommodated within the upper ring of the adaptor, rests on the lower ring of the satellite and acts on both rings, tending to join them together.

According to the invention, there is at least one pressing cam for each one of the curved metal pieces for fastening the satellite, the second shaft of said cams being fixed whilst its first shaft is movable and can describe a circumference in its movement. The second rotational shaft is also formed by several lugs.

Lastly, the invention provides for the installation of means, for example springs, suitable for compelling the first and second shafts to rotate when the system is released. One or two springs are preferably installed for each rotational shaft.

### BRIEF DESCRIPTION OF THE DRAWINGS

Further characteristics and advantages of the invention will be gained from the detailed description which follows of an embodiment thereof, based on the accompanying drawings in which:
Figure 1 illustrates a section of the system of the invention in its open position, and
Figure 2 shows a further section of the system of the invention in its closed position.

### DETAILED DESCRIPTION OF THE INVENTION

With reference to the drawings, it is pointed out that the fastening and separating system for satellites of the present invention comprises a piece 1 for fastening the system which is screwed to the upper ring 2 of the adaptor 3 of the launch rocket (not shown). This fastening piece 1 has a rotational shaft 4 which is formed by several lugs and which is common with other pieces 5 which are described below.

The system of the invention additionally incorporates a tensioning strip 6 consisting of a metal band in two parts which surround and press on pieces 7 (described below) as they are placed under tension.

The abovementioned pieces 7, customarily known as clamps in this field of the art, consist of a plurality of curved metal pieces which serve to fasten the satellite 8 and which have a thin-walled cylindrical body with a rotational shaft 9 in its lower part formed by several lugs. These pieces 7 rest via their upper part on the lower ring 10 of the satellite 8, surrounding it and pressing on it.

The abovementioned pieces 5 consist of a plurality of pressing cams which each have two rotational shafts, identified by the references 4 and 9. The shaft 9 is shared with said plurality of curved metal pieces 7 whilst the shaft 4 is shared with said piece 1 for fastening to the ring 2 of the adaptor 3.

Each of the curved metal pieces 7 for fastening the satellite 8 has allocated to it at least one pressing cam 5, the shaft 4 of said cams 5 being fixed whilst its other shaft 9 is movable and can describe a circumference in its movement. On performing this movement, it forces the deformation of the piece 7, which presses against the piece 12 (satellite), as well as of the piece 12 against the piece 2 (adaptor). Preferably, just like the rotational shaft 9, the rotational shaft 4 is also formed by several lugs.

The two rotational shafts 4 and 9 mentioned above are made from metal.

The system of the invention also includes means, for example springs (not shown), suitable for compelling the shafts 4 and 9 to rotate when the system is released. One or two springs are preferably installed for each rotational shaft 4, 9.

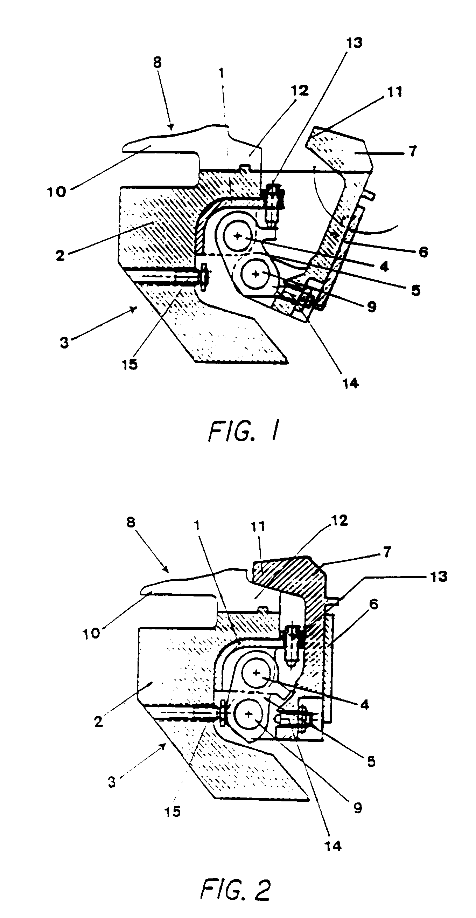

A prototype of the system in accordance with the invention, built for a satellite with a diameter of 1.194 m and for a tensioning strip capable of applying a tension of 2 Mt, has given excellent results in the practical tests which have been carried out. On applying tension to the strip 6, the pieces 7 are applied and adapt via their hook zone 11 to the corresponding antagonistic zone 12 of the ring 10 of the satellite 8 and are deformed, separating from the catch 13 to which they were joined in their open position in Figure 1 of the drawings. Simultaneously, the catch 14 is applied to the cams 5 and pushes them until they come into contact with the catch 15, assuming the position which is illustrated in Figure 2 of the drawings. The tensioning strip 6 is freed at the moment the satellite 8 is released through the action of two pyrotechnical devices (not shown) which are arranged at diametrically opposite points.

The values mentioned above for the diameter of the satellite and the tension of the tensioning strip must be regarded as simple non-limiting examples since, of course, the invention may apply to any diameter of satellite and operates perfectly with different tensions of the tensioning strip.

In the tests carried out, it was possible to observe that the system of the invention functions satisfactorily and does not suffer from the seize-up and/or slipping defects of the tensioning strip which were mentioned when discussing the prior art. In addition, the system of the invention offers a notable saving in costs compared with other known systems, on the grounds, basically, of the simpliciity of its structure, and it also retains a high degree of operational reliability.

The preceding description has been made with reference to what is at this time regarded as the preferred embodiment of the invention. However, experts in the field will understand that various modifications in detail are possible without thereby departing from the scope of the invention which must be limited solely by the scope of the contents of the attached claims.

## Claims

1. Fastening and separating system for satellites which comprises a piece (1) for fastening the system which is screwed to the upper ring (2) of the adaptor (3) of the launch rocket and a tensioning strip (6) consisting of a metal band in two parts which surround and press on pieces (7) for fastening the satellite (8) as they are placed under tension, characterized in that said pieces (7) consist of a plurality of curved metal pieces which have a thin-walled cylindrical body with a metal rotational shaft (9) in its lower part formed by several lugs and which rest via their upper part on the lower ring (10) of the satellite (8), surrounding it and pressing on it, and in that it includes, moreover, a plurality of pressing cams (5) which each have two metal rotational shafts (9, 4), one (9) coinciding with that of said plurality of metal pieces (7) and the other (4) shared with said piece (1) for fastening to the ring (2) of the adaptor (3).

2. System according to Claim 1, characterized in that it is provided with at least one pressing cam (5) for each one of the curved metal pieces (7), the rotational shaft (4) of said cams (5) being fixed, whilst its other rotational shaft (9) is movable and can describe a circumference in its movement such that, on performing this movement, it forces the deformation of the piece (7), which presses against the piece (12) (satellite), as well as of the piece (12) against the piece (2) (adaptor) .

3. System according to Claim 2, characterized in that the rotational shaft (4) of the cams (5) is formed by several lugs.

4. System according to any one of the preceding claims, characterized in that it includes actuating means which act on the rotational shafts (4, 9) of the cams (5) to compel them to rotate when the fastening and separating system is released from the satellite (8).

5. System according to Claim 4, characterized in that said actuating means consist of one or two springs for each rotational shaft (4, 9).
